# EUROPEAN PATENT APPLICATION

(11) **EP 3 453 443 A1**
(43) Date of publication of application: **13.03.2019**
(21) Application number: 17190593.8
(22) Date of filing: 12.09.2017
(51) Int. Cl.: B01D 46/00, B01D 46/10

(54) **FILTER INSERT, GRID FOR A FILTER INSERT AND AIR FILTER SYSTEM**

(71) Applicant: MANN + HUMMEL GMBH, 71636 Ludwigsburg (DE)
(72) Inventor: VELLATHUMPARAMBIL, Shajahan, 673302 Kozhikode (IN); BR, Deepthi, 560032 Bangalore (IN); SHARMA, Mridul, 560094 Bangalore (IN)
(74) Representative: Seyboth, Matthias

(57) **Abstract**

A filter insert (1) comprising a main filter (3), a prefilter element (4) and a grid, wherein the main filter (3) comprises a filter medium pack (7) and a frame (8); wherein the prefilter element (4) is positioned upstream to the main filter (3) and a grid (5), wherein the grid (5) has an upstream and a downstream side (23, 24) and wherein the filter insert (1) comprises at least one guide vane (6, 10) having at least one air guiding surface (25, 26) wherein the at least one guide vane (6, 10) is positioned on and extend from the upstream side (24) of the grid (5) and
a grid for a filter insert (1) and an air filter system (30).

## Description

### Technical field

The current invention relates to an air filter system and a filter insert.

### State of the art

A suitable air filter system with a filter insert is disclosed in WO12085419 A1. The air filter system has already very good filter properties. However it is of interest to further improve the filter properties such as pressure drop.

### Disclosure of the invention

The problem to be solved is to provide a filter insert which has improved filter properties.

The current invention provides a solution for this problem with a filter insert with the features of claim 1, a grid with the features of claim 13 and with an air filter system with the features of claim 16.

An inventive filter insert comprises a main filter, a prefilter element and a grid, wherein the main filter comprises a filter medium pack and a frame; wherein the prefilter element is positioned upstream to the main filter and a grid, wherein the grid has an upstream and a downstream side and wherein the filter insert comprises at least one guide vane having at least one air guiding surface wherein the at least one guide vane is positioned on and extend from the upstream side of the grid.

The frame extends at least partially circumferentially around the filter media pack. The prefilter element is positioned upstream to the main filter. The grid is positioned upstream to the prefilter filter and is configured to hold the prefilter element in place with respect to the main filter

The inventive filter insert with the guide vane or guide vanes has a lower pressure drop compared to the state of the art. Further embodiments of advantage are subject matter of the sub claims.

It is of advantage that the filter medium pack of the main filter comprises a filter medium which is and is provided with pleats and wherein the frame has a front side and at least two border sides, preferably with closed border sides, extending over the average high of the pleats.

The grid can be attached permanently or detachably to the frame, preferably by a mechanical connection, which can be an exclusively mechanical connection.

A preferred mechanical connection is a snap-fit connection. The words snap-fit connection, latching connection and a catch connection shall be understood equivalent according to the current invention.

In such a snap-fit connection the grid has at least a first snap-fit- connection part such as a snap-in pin or a snap-in strap. a snap-in pin provided at the frame can be directly couple to the bars of the grid. This way no second snap-fit connection part is needed.

For a higher stability of the connection however, it is of advantage if there is a first snap-fit- connection part of said snap-fit connection at the grid and that the frame is provided with a second snap-fit- connection part of said snap-fit connection wherein the first and/or the second snap-fit- connection part of said snap-fit connection is a snap-in pin and/or a snap in strap.

Optionally or alternatively the mechanical connection between the frame and the grid and the prefilter inbetween can also be provided by means of one or more fastening element(s), preferably by one or more screws, nuts und/or rivets.

The frame can be provided with a flange, which at least partially circumferentially radially extends from the border sides. Radially is to be understood with respect to a length axis of the filter element, i. e. the direction of flow. In an embodiment the extension of the flange is not exactly radial (90° to the length axis), but hasan angle from 70° to 110°. This way a gasket can be easily applied. The gasket can preferably comprise an elastomeric material, with a recess, especially a u-shaped groove, for the admission of the flange. The gasket defines at least one sealing plane, which extends preferably perpendicular to the air flow direction of the air applied to the filter medium of the filter medium pack.

The filter medium of the filter medium pack is firmly joint to the frame by plastic-moulding with the plastic material of the frame.

The first front side of the frame is facing away from the grid and a second front side of the frame is facing towards the grid. The gasket can either provide said first front side of the frame. Alternatively the gasket can be positioned at any height between said first and second front sides.

The frame, especially the border sides of the frame, can be provided with one or more recesses, which extend preferably in a u-shaped or v-shaped form along the border sides of the frame.

Said recesses can extend with any height in the section between the second front side and the sealing plane defined by the gasket. The recesses can extend at least in said area but they can extend even further in the area of the grid.

Said recess or recesses have at least one open side at the second front side or at the grid.

An inventive grid for the inventive filter insert comprises a planar section having an upstream and a downstream side. The grid comprises at least two guide vanes each having at least one air guiding surface wherein the guide vanes are positioned on and extend from the upstream side of the grid and wherein the air guiding surface of a first guide vane has a bigger surface than the air guiding surfaces of the second guide vane.

The filter insert can comprise the grid, preferably as a planar section, and the vanes as a one-piece element.

The vanes, especially the air guiding surfaces, are curved, wherein both vanes are curved in basically the same direction, and wherein preferably the first and the second guide vane have substantially the same form but different dimensions.

The surface area of the air guiding surface of said first guide vane is at least 30% bigger than the air guiding surface of said second guide vane.

The vanes are connected, preferably directly connected, to at least one grid bar of the grid.

An inventive air filter system comprise a housing with an air inlet and an air outlet and an inventive filter insert, wherein the housing comprises a cavity for the reception of intake air from the inlet and wherein the filter insert is positioned inside the housing such that the vanes extend inside the said cavity for the reception of intake air. The system can either comprise a filter insert with an integrated grid (one-piece with the frame or connected to the frame) or a filter insert that has the grid as a separate part, wherein the installation in the latter case comprises the steps of independently installing the grid, the prefilter element and the main filter into the housing,

The housing can comprise a housing body and a detachable housing cap, for the exchange of the main filter and/or the prefilter element.

The prefilter element is hold mechanically inside the housing by a press-fit so that the prefilter medium is at least partly supported by the frame. This support could be preferably in a peripheral region of the prefilter medium.

The housing cap can be provided with a pipe section as an outlet for filtered air.

The vanes can preferably be connected to the grid, wherein the connection areas of the vanes are parallel to each other.

The vanes can extend parallel to the width of the grid, wherein the length of the grid is at least 30%, preferably at least 40%, of the width of the grid.

The grid can be provided with openings, wherein the openings extend over at least 90%, preferably at least 95%, of an upstream surface of the grid.

At least the grid, preferably the frame and the grid, can constitute of plastic material, preferably thermoplastic material.

The filter medium of the prefilter can be a planar filter medium defining a plane parallel to the grid, wherein the planar filter medium has the same dimension at along the plane as the grid.

### Description of the drawings

An advantageous embodiment of the invention is further explained in detail by a drawing. Specific parts of the embodiment can be understood as separate features that can also be realized in other embodiments of the invention. The combination of features described by the embodiment shall not be understood as a limitation for the invention:
- Fig. 1:: a perspective view on a first embodiment of a filter insert;
- Fig. 2: an exploded view on the filter insert of Fig. 1;
- Fig. 3: a first side view on the filter insert of Fig. 1 and 2;
- Fig.4: a top view on the filter insert of Fig. 1-3;
- Fig.5: a cross-sectional view along line A-A on the filter insert in Fig. 4
- Fig.6: a second side view on the filter insert of Fig. 1-5
- Fig. 7: a perspective view on an air filter system;
- Fig. 8: a first cross-sectional view on the air filter system of Fig. 7
- Fig. 9: a second cross-sectional view on the air filter system of Fig. 7;
- Fig. 10: a first side view on a grid with vanes;
- Fig. 11: a top view on the grid of Fig. 10;
- Fig. 12: a second side view on the grid of Fig. 10 and 11;
- Fig. 13: a cross-sectional view on a housing body;
- Fig. 14: a second cross-sectional view on the housing of Fig. 13
- Fig. 15: a perspective view on a second embodiment of a filter insert;
- Fig. 16: a top view on the filter insert of Fig. 15;
- Fig. 17: a side view on the filter insert of Fig. 15 and 16; and
- Fig. 18: a cross-sectional view on the filter insert of Fig. 15-17.

### Embodiment of the invention

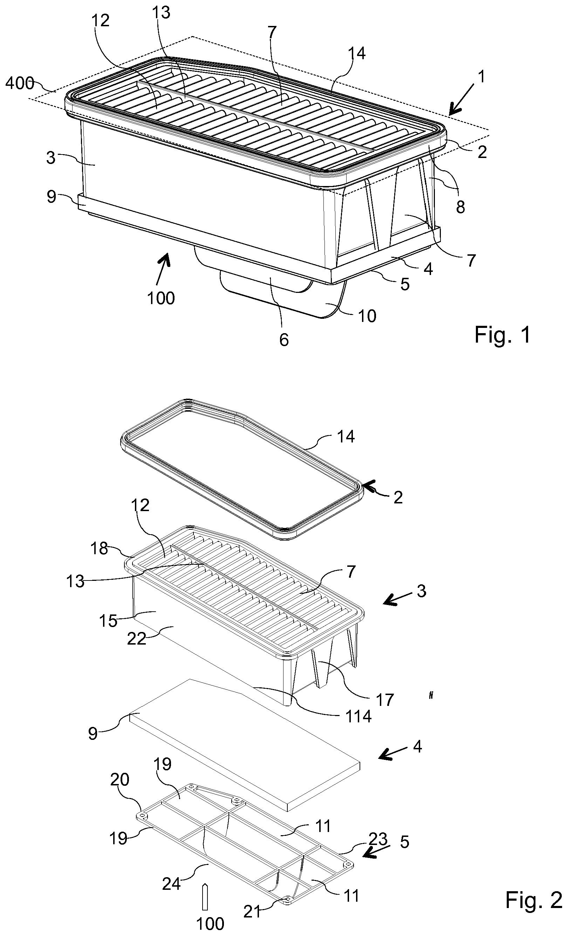

A filter insert 1 according to a first embodiment of the invention is shown in Fig. 1. It comprises a main filter 3, a prefilter element 4 and a grid 5.

The words prefilter element and prefilter 4 are equivalent in the current invention.

The main filter comprises a filter medium pack 7 and a frame 8. The frame 8 comprises a frame member 22 which is arranged circumferentially around the filter medium pack 7 and a gasket 2, for the sealing of the filter insert 1.

The filter medium pack 7 is a folded filter medium with pleats 12 that are arranged in a zick-zack folding structure in the frame.

The frame member 22 is preferably substantially rigid and is preferably made of a moldable material such as suitable molded plastic material although other materials such as metals and ceramics as well as other suitable materials know to those skilled in the art may also be employed without deviating for the inventive concepts presented herein.

The frame member 22 has formed therethrough a flow aperture. The frame member 22 comprises at least two border sides 15 and 17 that extend in the direction of the pleat high of said pleats 12. Therefore the border sides 15 and 17 extend in a direction substantially aligned with the axial air flow direction 100.

The frame member 22 is provided with a flange 18 that is preferably arranged substantially parallel to a front side 14 of the gasket 2, which is also the front side of the filter insert 1 which extends perpendicular to border sides and which forms a sealing surface downstream of the filter medium pack 7.

The flange 18 extends radially outwardly from said border sides 15 and 17. The flange 18 is preferably configured to extend in a u-shaped recess of said gasket 2. The gasket 2 is preferably made of an elastomeric material and provides the front side 14 of the filter insert 1 which is configured as the sealing surface. The gasket 2 should engage the filter insert inside the housing of a air filter system 30 in a seal tight way, thereby requiring an air flow between an inlet 37 and an outlet 38 of the housing to flow through the filter insert 1, especially through the filter medium pack 7. The gasket 2 can be form fitted or joint, especially cohesively joint, to the frame member 22. This can preferably be done manually or by injection moulding.

The frame member 22 may include one or more elongated ribs or plates 13 extending between two opposite border sides 17 of the frame in a folding direction 200 of the filter medium pack 7. The one or more ribs or plates 13 are configured to stabilize the pleats 12 of the filter medium pack 7 and/or the frame 8.

The frame member is joint to at least two sides, preferably to all sides, of said filter medium pack 7 by moulding, especially by injection moulding. At least two opposite border sides 17 of said frame member 22 are provided with one or more recesses 29, which is of advantage to optimize the filtration efficiency and the weight of the filter insert 1. Preferably for the stabilization of said frame 8 there is at least one central section at said border side 17 that extends over the whole pleat high.

Upstream of the main filter 3 there is a prefilter element 4. The prefilter element 4 can preferably be a flat and substantially non-folded filter medium 4, that eliminated raw impurities in the air stream such as small stones and or other bigger compounds. The prefilter element 4 of the can preferably be connected only by force-fit or press-fit to the main filter 3. The force-fit connection of the prefilter element 4 can be achieved through a connection of the grid 5 and the frame member 22 with the prefilter element 4 between these two parts.

Both the filter medium of the filter medium pack 7 and the prefilter medium 9 can comprise or consist of nonwoven material, preferably with a synthetic fibers, especially with PPT-20 (polypropylene terephthalate); PPT-40 and /or Polyamide. At temperatures above 80°C the nonwoven materials can optionally be filled with glas fibers.

The dust load capacity of the filter medium 7 is higher, preferably at least two times higher, than the dust load capacity of the prefilter medium 9. The pressure drop at the prefilter medium 9 is preferably lower than the pressure drop at the filter medium 7 of the main filter 3.

A connection between the grid 5 and the main filter 3 is not necessary; it is also possible to position the grid 5, the prefilter element 4 and the main filter one above the other, preferably in a stacked manner. In some embodiments a connection could be of advantage for a better handling of the filter insert 1. Various types of connections between the grid 5 and the frame member 22 are possible, such as a screw-connection, a clip-connection, a hinge-connection and/or a latching connection.

Upstream of the prefilter element 4 there is a grid 5. The grid 5 is provided with openings 11 that are separated with grid bars 19. 8. The openings can preferably extend over at least 90%, most preferably over at least 95%, of the upstream surface 24 of the grid 5.

The grid 5, the frame 8 and/or the guide vanes 6, 10 are preferably made of a plastic material, especially a thermoplastic or thermosetting material. At least the grid, preferably also the frame, constitutes of plastic material, preferably thermoplastic mate. The prefilter medium 9 and the filter medium 7 can comprise or consist of a nonwoven material.

The grid 5 is a support for the prefilter 4. The grid 5 is provided with one or more platforms 20 which are provided with holes 21. These holes 21 can interact with pins of a support 32 of a housing body 33 of an air filter system 30 to position the grid inside said air filter system 30.

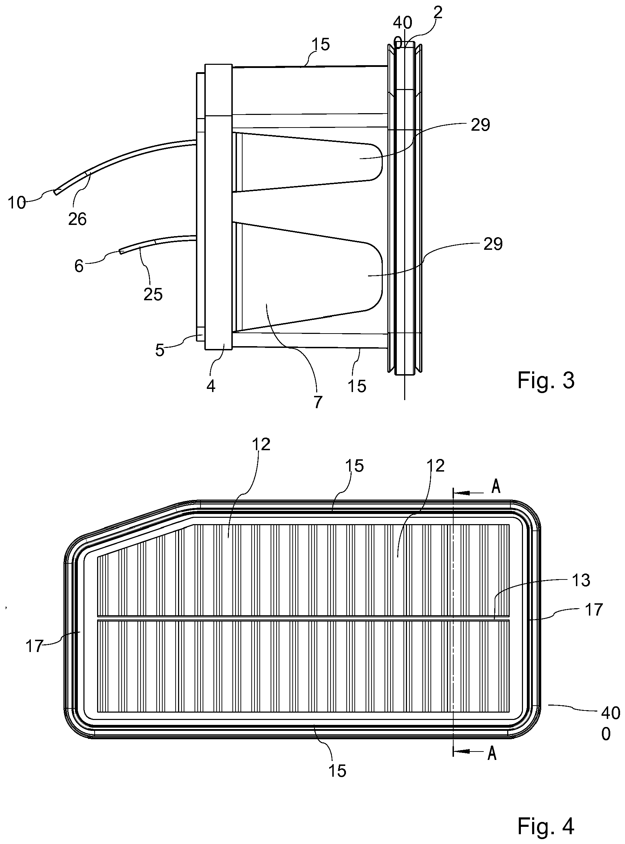

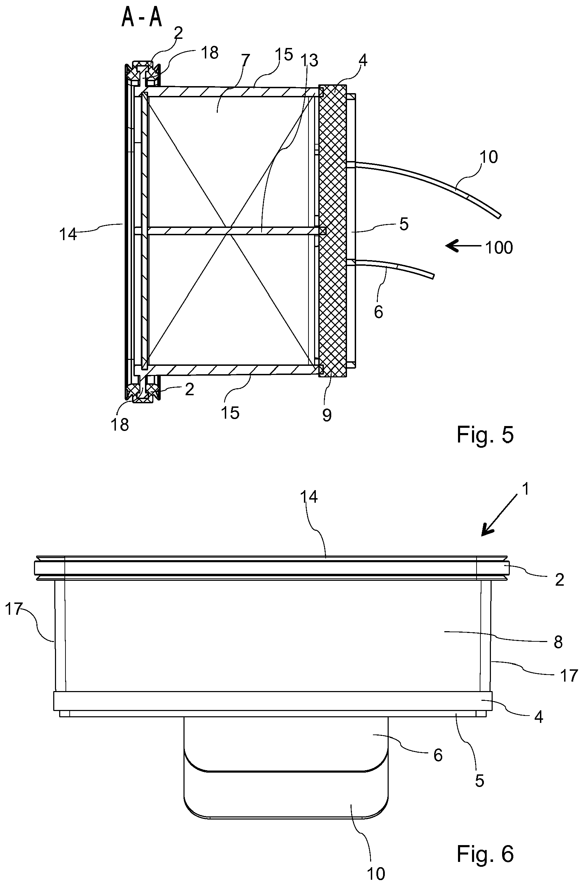

The grid 5 is provided with guide vanes 6, 10 for the guidance of an intake air flow. The grid has an upstream side 24 and a downstream side 23. As shown in Fig. 1-6, the grid 5 comprises at least two guide vanes 6, 10 each having at least one air guiding surface 25, 26.

The grid can have a thickness, a distance between the upstream and the downstream side 24 and 23, of at least 2 mm, preferably between 2.5 to 3 mm.

The guide vanes 6, 10 are positioned on and extend from the upstream side 24 of the grid 5. They can be combined with the grid as a one-piece element. It is however also possible that the vanes are detachable connected with the grid, for example in a tongue and groove joint, so that the grid and the vanes can be produced individually and the choice of the dimensions of the vanes can be dependent on the size of the housing body 33 of said air filter system 30.

The guide vanes 6 and 10 can have a thickness of at least 1,5 mm, preferably between 2,0 - 2,5 mm.

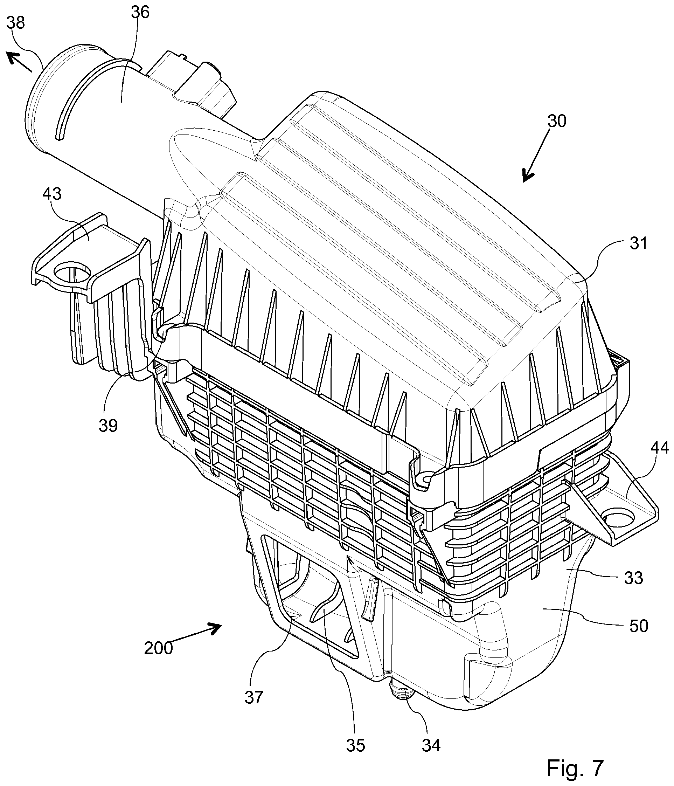

In Fig. 7-9 one can see that the air filter system 30 has an air inlet 37 at a border side of the housing body 33. Consequently a part of the non-guided air flow would be directed against a housing wall on the opposite side of said air inlet 37 and whirls would be produced. These whirls can be guided by said guide vanes 6, 10 so that the filter efficiency is higher.

Said guide vanes are preferably positioned substantially perpendicular to the direction 200 of the air flow flowing entering the housing body 33 through the air inlet 37.

To reduce the tendency of blockage it is of advantage that the air guiding surface 26 of the second air guide vane 10 in flow direction 200 has a bigger surface than the air guiding surfaces 25 of the first guide vane 6 in flow direction 200.

For a better guidance of air whirls it is of advantage that all vanes 6, 10 or at least some of the vanes 6, 10 are curved in basically the same direction, especially against the flow direction 200.

The surface area of the air guiding surface 25 of said first guide vane 6 is preferably at least 30% smaller than the air guiding surface 26 of said second guide vane 10.

The vanes 6, 10 are connected to the grid 5, especially to the grid bars 19. The connection areas, either by form-fit or by substance to substance connection, of the vanes 6 and 10 are preferably parallel to each other.

The preferred position of the vanes 6, 10 is parallel to the width of the grid 5. The preferred length of the grid is at least 30%, preferably at least 40%, of the width of the grid 5.

Fig. 7-9 discloses an air filter system 30 with the filter insert 1 positioned in a housing 50.

The housing 50 comprises a housing body 33 and a housing cap 31 or housing cover which are connected to each other along a connection plane 300. The filter insert 1 is positioned in the housing in a position that the front side 14 of the filter insert 1 is parallel to the connection plane 300.

The housing cap 31 comprises a pipe section 36 with an outlet 38 for filtered air. A hose can be attached to the pipe section 36. The pipe section 36 has a pipe channel 45 having a channel axis which is parallel to the connection plane 300.

The housing cap 31 is detachable connected to the housing body 33 by holding means such as screws 39. It is also possible that the holding means can be clips, snapping elements, a latching and/or catching mechanism.

At the periphery of the frame 8, especially in region of the gasket, the housing cap 31 and the housing body 33 are provided with circumferentially stop faces 46, 47, which are fitted closely with the gasket 2, so that the gasket and therefore the filter insert 1 is connected in the periphery by a press-fit connection, wherein the gasket 2 is clamped between the two stop faces 46 and 47.

In general one could derive from Fig. 7-9 that the sealing position of the main filter 3, defined by the gasket 5, is on the clean surface of the filter insert 1. Said clean surface is the front side 14 of the filter insert 1.

The housing body 33 has a bottom area. An outlet 34 especially for liquids, can be provided in the bottom area of said housing body 33.

The housing body 33 further comprises a first cavity 41 between the air inlet 37 and the filter insert 1 for intake air. The housing body 33 comprises air guide and stability ribs 35 which extend from an inner wall section of the housing body 33 in said first cavity 41. Said air guide and stability ribs 35 are positioned perpendicular to said guide vanes 5, 6 of the filter insert 1.

The housing body further comprises supports 32 in the form of further stop faces with pins extending perpendicular to said stop faces. These pins can be inserted in said holes 21 of the grid 5 and can secure a position of the grid 5 inside the housing body 33.

As shown in Fig. 7, the inlet 37 is oriented in the housing 50 at an angle of 90° to the outlet 38.

At an outer wall section the housing body 33 can comprise one or more platforms 43, 44 with holes for inserting screws, bolts and the like. This way the air filter system 30 can be positioned for example in the engine compartment of a vehicle.

The air filter system including the filter insert 1 and the housing 50 is divided basically in three parts a first cavity for intake air, a filtration area where intake air is filtered by the filter insert and a second cavity for filtered air.

The filter insert can be provided to a customer as a kit with separate parts, the main filter, the prefilter and/or the grid and optionally a separate gasket.

It is also possible that the filter insert is only one element where the main filter, the gasket, the prefilter and the grid are already connected, for example by press fit, force fit or substance to substance connections.

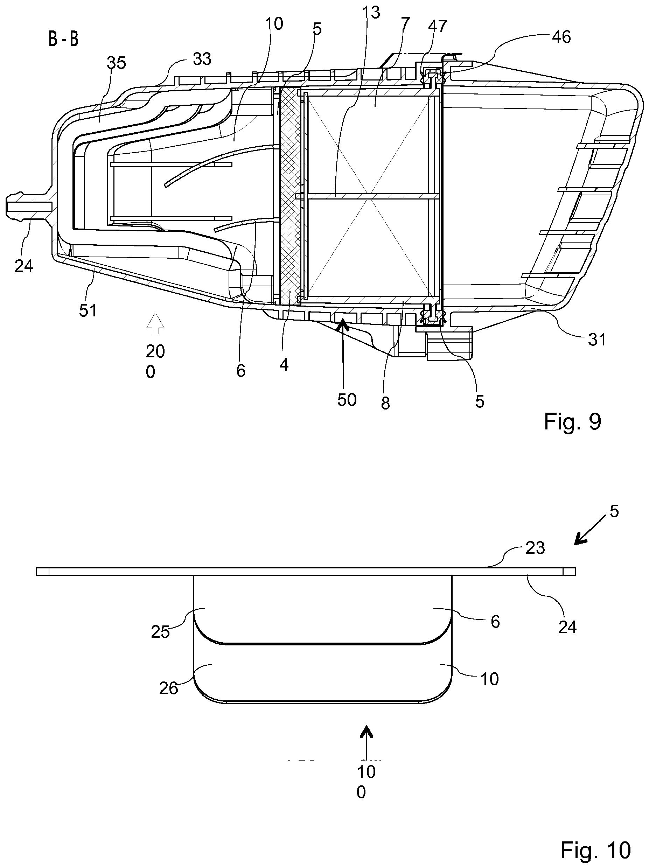

Fig. 10-12 show the grid 5 with the grid openings 11 and the air guide vanes 6 and 10.

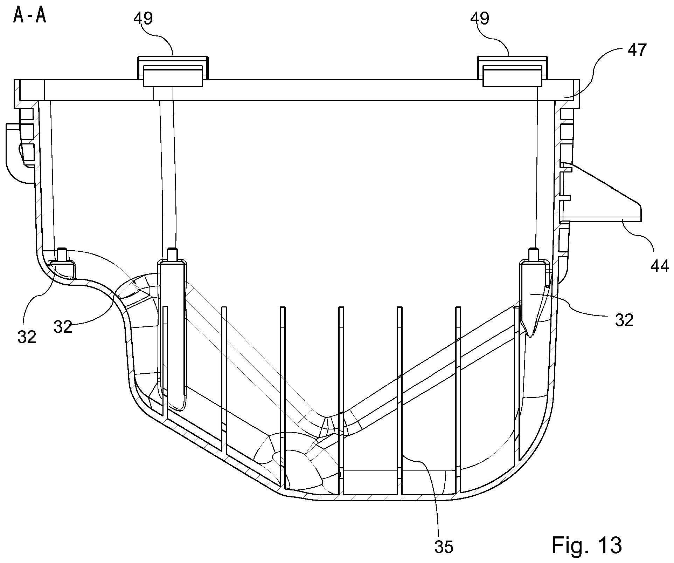

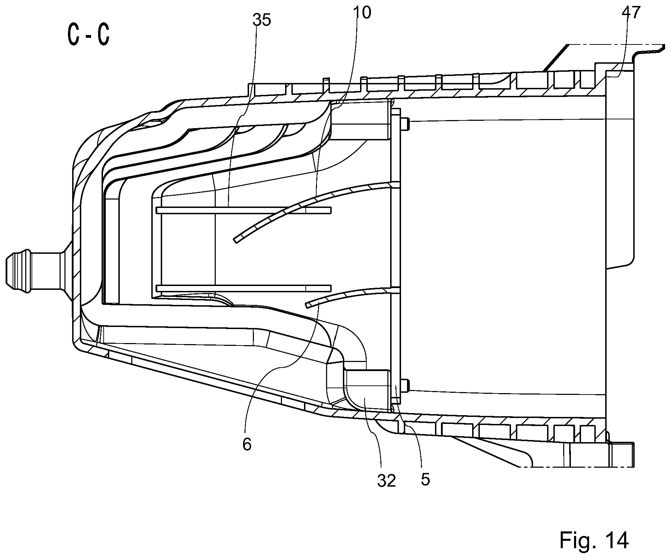

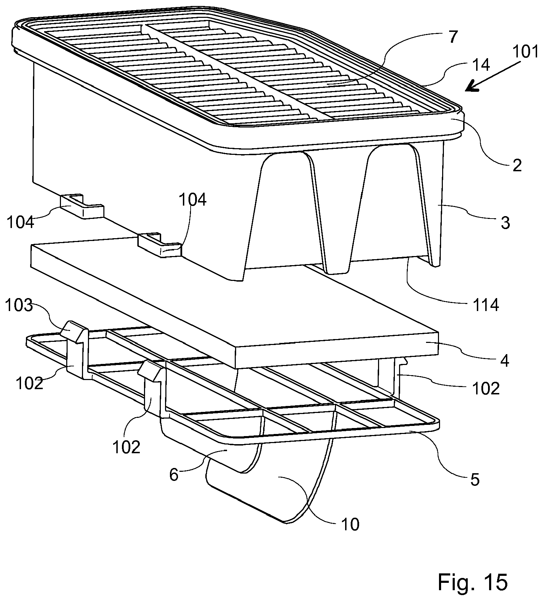

Fig. 13 show the housing body 33. For the positioning of the grid 5 the housing body 33 in the embodiment of Fig. 14 and 15 comprises five supports 32 each having one stop face and one pin extending from the stop face in the direction of the connection plane 300.

In Fig. 14 the grid 5 is placed of the stop faces of the suppors 32 and the pins are inserted in the holes 21 for a horizontal fixation of said grid 5 inside the housing body 33.

As shown in Fig. 14 the housing body 33 comprises fixation means extending radially from the wall 51 of the housing body. Said platforms 43 and 44 are provided for the fixation of the air filter system in a compartment. Further fixation means are provided in the form of two screw-receiving plattforms 48. On the opposite side of said screw-receiving platform there is a groove for a tongue and groove connection, wherein the tongue is provided by the housing cap 31. The tongue groove connection is held in place by the fixation of the screw-receiving plattforms 48 with corresponding screw-receiving plattforms in the housing cap 31 with the screws 39. This connection is one preferred of numerous possible examples to connect the housing cap 31 with the housing body 33.

The invention has numerous advantages over the state of the art. Some of them are presented below:
The air filter system as shown in Fig. 7-14 with the air filter insert as shown in Fig. 1-7 provides a good solution for a filtration when there is only a small area for the position of a filter insert.

The main filter 3 of the filter insert 1 can be changed for example after three periodic check-ups while the prefilter 4 can be exchanged more often.

The grid 5 can be reused during the changes of the main-filter 3 or the prefilter 4. The grid 5 with the vanes 6 and 10 can be even used as a lifetime component of the air filter system 30 which remains in the vehicle over the whole lifetime of the vehicle.

The guide vanes 6 and 10 provide a more uniform distribution of the air flow to be filtered. Therefore the pressure drop between the intake air flow and the filtered air flow is reduced.

The filter insert 1 can be easily exchanged while the housing 50 of the air filter system 30 can be reused and does not need to be disengaged during an exchange of the filter insert 1 or parts of said filter insert 1.

The exchange of the insert during a check-up can be done in a very time- and cost-efficient way.

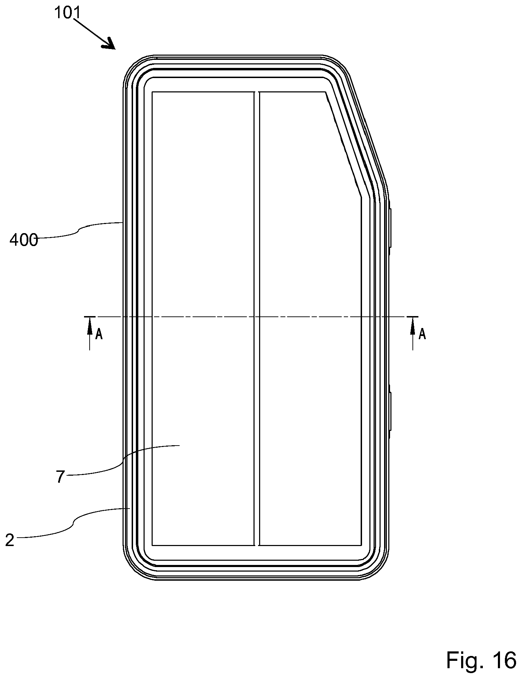

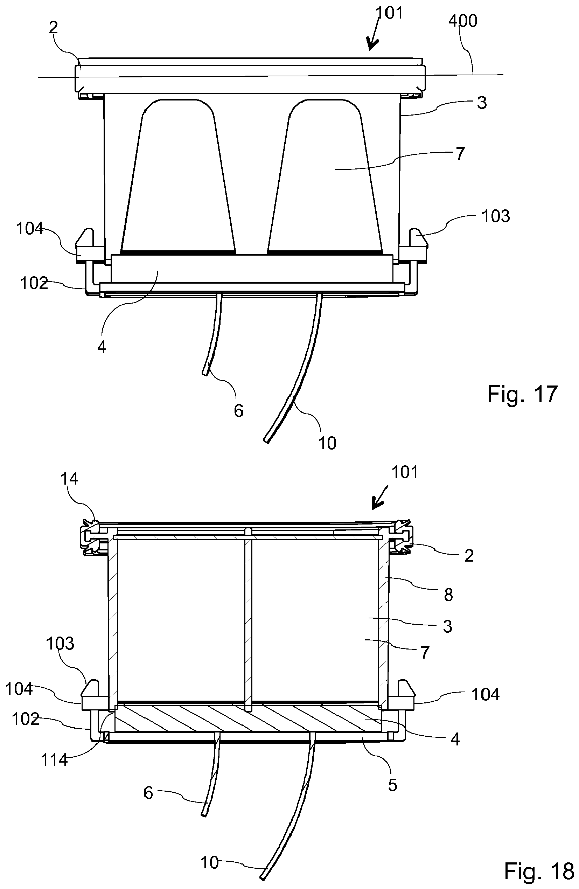

In Fig. 15-18 a second embodiment for an inventive filter insert 101 is presented. The parts of said filter insert 101 that are equal to the parts of the embodiment of Fig. 1-4 are marked with the same reference signs.

In the embodiment of Fig. 15-18 the grid 5 is attached detachably to the frame 8 by a mechanical connection. This connection is provided by a first snap-fit connection part 102 on the grid 5 which is formed as one or more male parts, especially as a snap-fit straps. A snap fit strap is provided with a plug element having a latching lug 103 at a terminal position of said plug element.

The frame 8 is provided with a second snap-fit connection part which is formed as one or more female parts, especially as brackets 104, extending from the border sides of the frame 8. The snap in strap can be guided through the brackets and can by fixed in axial direction by a snap-fit connection where the latching lug of said plug element abuts against the bracket. Like in the first embodiment the grid 5 has both the function of holding the prefilter element 4 with respect to the main filter 3 and carries the guide vanes 6,10. This embodiment has the advantage that installation into the housing is much more convenient as the filter insert 1 can be installed as a unit and its pieces do not need to be installed independently.

It can be understood from Fig. 15-18 that it is also possible that the frame is provided with said snap-fit strap or pin and that the grid can be provided with said brackets.

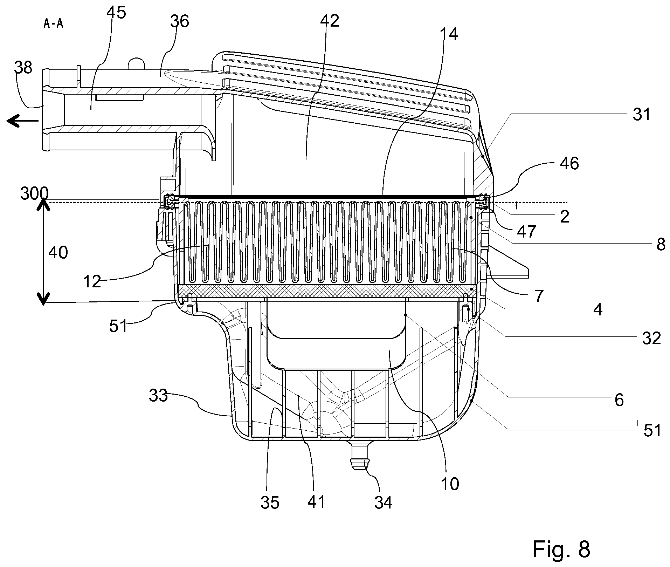

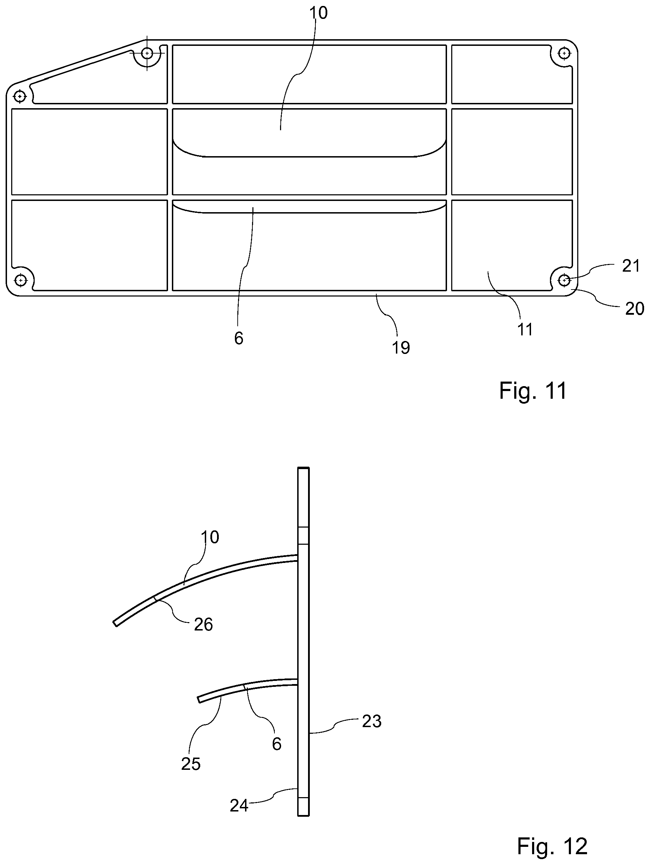

It is also possible that snap-fit pins with terminal latching lugs extend from the front side of the frame and can pass through the holes 21 of the grid 5 shown in Fig. 11. These terminal pin-sections can extend from the opposite side 24 of the grid 5 and they can be used to position the grid in recesses inside the housing 50 in the way of a mechanical inversion to the connection of Fig. 8 with the pins of the support 32. These pins of the support 32 can be replaced in this embodiment by recesses for the reception of said terminal pin-sections.

Also other connections between the grid 5, the prefilter 4 and the frame 8 are possible preferably by using the holes 21, such as screw connections, nut connections or rivet-connections.

## Claims

1. A filter insert (1) comprising a main filter (3), a prefilter element (4) and a grid (5),
wherein the main filter (3) comprises a filter medium pack (7) and a frame (8) that at least partially extends circumferentially around the filter medium pack (7);
wherein the prefilter element (4) is positioned upstream to the main filter (3) and
wherein the grid (5) has an upstream and a downstream side (23, 24), is positioned upstream to the prefilter element (4) and is configured to hold the prefilter element (4) in place with respect to the main filter (3),
and wherein the filter insert (1) comprises at least one guide vane (6, 10) having at least one air guiding surface (25, 26) wherein the at least one guide vane (6, 10) is positioned on and extends from the upstream side (24) of the grid (5).

2. A filter insert according to claim 1, **characterized in that** the at least one guide vane (6, 10) is formed as one-piece with the grid (5).

3. A filter insert according to claim 1 or 2, **characterized in that** the grid (5) is attached permanently or detachably to the frame (8), preferably by a mechanical connection, most preferably
- by a snap-fit connection, wherein the grid (5) or the frame (8) of the main filter (3) element has at least one first snap-fit- connection part (102) of said snap-fit connection, especially a snap-in pin or a snap-in strap or
- by means of one or more fastening element(s), preferably by one or more screws, nuts und/or rivets.

4. A filter insert according to claim 3, **characterized in that** the grid (5) is provided with the first snap-fit-connection part (102) of said snap-fit connection and wherein the frame (8) is provided with a second snap-fit connection part (104) of said snap-fit connection wherein the first and/or the second snap-fit- connection part (102, 104) of said snap-fit connection is a snap-in pin and/or a snap in strap.

5. A filter insert according to one of the preceding claims, **characterized in that** a filter medium of the filter medium pack (7) of the main filter (3) is folded and is provided with pleats (12) and wherein the frame (8) has a first front side (14) and at least two border sides (15, 17), preferably extending over the average high of the pleats (12).

6. A filter insert according to claim 5, **characterized in that** the frame (8) is provided with a flange (18) which at least partially circumferentially extends radially from the border sides (15, 17) of the frame (8).

7. A filter insert according to one of the preceding claims, **characterized in that** the frame (8) comprises a gasket (2), which preferably comprises or consists of an elastomeric material, with a recess for the admission of the flange (18) and which defines a sealing plane (400).

8. A filter insert according to any of the claims 5 to 7, **characterized in that** the first front side (14) of the frame (8) is facing away from the grid (5) and a second front side (114) facing towards the grid (5) and wherein the gasket (2) either provides said first front side (14) or the frame (8) or wherein the gasket (2) is positioned between said first and second front sides (14, 114).

9. A filter insert according to one of the preceding claims, **characterized in that** the filter medium pack (7) is joint to the frame (8) by plastic-moulding of a plastic material of the frame (8).

10. A filter insert according to one of the preceding claims, **characterized in that** the frame (8), especially the border sides (15, 17) of the frame (8), are provided with one or more recesses (29), extending at least partly between the second front side (114) and the sealing plane (400), wherein preferably the one or more recesses (29) have an open side at the second front side (114) or at the grid (5)

11. A grid for a filter insert (1) according to one of the preceding claims, wherein the grid (5) has an upstream and a downstream side (23, 24) and wherein the grid (5) comprises at least two guide vanes (6, 10) each having at least one air guiding surface (25, 26) wherein the guide vanes (6, 10) are positioned on and extend from the upstream side (24) of the grid (5) and
wherein the air guiding surface (26) of a first guide vane (10) of said guide vanes (6, 10) has a bigger surface than the air guiding surface (25) of a second guide vane (6) of said guide vanes (6, 10).

12. A grid according to claim 11, **characterized in that** the vanes (6, 10), especially the air guiding surfaces (25, 26), are curved, wherein both vanes (6, 10) of said guide vanes (6, 10) are curved in basically the same direction, and wherein preferably the first and the second guide vane (6, 10) of said guide vanes (6, 10) have substantially the same form but different dimensions.

13. A grid according to one of the preceding claims, **characterized in that** the surface area of the air guiding surface (26) of said first guide vane (10) is at least 30% bigger than the air guiding surface (25) of said second guide vane (6).

14. Air filter system (30) comprising a housing (50) with an air inlet (37) and an air outlet (38) and a filter insert (1) according to one of the preceding claims, wherein the housing (50) comprises a cavity (41) for the reception of intake air from the inlet (37) and wherein the filter insert (1) is positioned inside the housing (50) such that the vanes (6, 10) extend inside the said cavity (41) for the reception of intake air.

15. Air filter system according to claim 14, **characterized in that** the housing (50) comprising a housing body (33) and a detachable housing cap (31), for the exchange of the main filter (3) and the prefilter element (4).
